# EUROPÄISCHE PATENTANMELDUNG

(11) **EP 1 939 420 A1**
(43) Veröffentlichungstag der Anmeldung: **02.07.2008**
(21) Anmeldenummer: 06027131.9
(22) Anmeldetag: 30.12.2006
(51) Int. Cl.: F01N 3/08, F01N 3/20, F01N 7/04

(54) **Verfahren zum Entschwefeln von Stickoxid-Speicherkatalysatoren in der Abgasanlage eines Magermotors**

(71) Anmelder: Umicore AG & Co. KG, 63457 Hanau-Wolfgang (DE)
(72) Erfinder: Eckhoff, Stephan, Dr., 63755 Alzenau (DE); Philipp, Suzanne, Dipl.-Ing., 64287 Darmstadt (DE); Müller, Wilfried, Dipl.-Ing., 61184 Karben (DE); Kreuzer, Thomas, Dr., 61184 Karben (DE)

(57) **Zusammenfassung**

Magermotoren benötigen zur Entfernung von Stickoxiden aus ihren Abgasen eine Abgasanlage mit Stickoxid-Speicherkatalysatoren. Wird der Magermotor mit einem schwefelhaltigem Abgas betrieben, so müssen die Speicherkatalysatoren von Zeit zu Zeit entschwefelt werden. Während der Entschwefelung besteht die Gefahr hoher Schadstoffemissionen. Diese Emissionen können vermindert werden, wenn die Zylinder des Magermotors in zwei Gruppen zusammengefaßt werden, die ihr Abgas in zwei zugeordnete Abgasleitungen abgeben, in denen jeweils mindestens ein Stickoxid-Speicherkatalysator angeordnet ist. Die beiden Abgasleitungen sind hinter den Speicherkatalysatoren zu einer gemeinsamen Abgasleitung zusammengefaßt, die einen Katalysator enthält, der unter stöchiometrischen Bedingungen eine Dreiweg-Funktion besitzt. Die beiden Stickoxid-Speicherkatalysatoren werden zeitlich gegeneinander versetzt entschwefelt. Während der eine Speicherkatalysator zur Entschwefelung von fettem Abgas hoher Temperatur durchströmt wird, wird der zweite Speicherkatalysator von magerem Abgas durchflossen, derart, daß das zusammengeführte Abgas während der gesamten Entschwefelungsdauer stöchiometrisch zusammengesetzt ist. Unter den stöchiometrischen Bedingungen ist der Katalysator mit Dreiweg-Funktion in der Lage, Kohlenwasserstoffe, Kohlenmonoxid und Stickoxide zu unschädlichen Komponenten umzusetzen.

## Beschreibung

Die Erfindung betrifft ein Verfahren zum Entschwefeln von Stickoxid-Speicherkatalysatoren in der Abgasanlage eines Magermotors mit mehreren Zylindern.

Als Magermotoren werden Dieselmotoren bezeichnet sowie Ottomotoren mit Benzin-Direkteinspritzung und CNG-Motoren, (Compressed Natural Gas = Methan), die mager betrieben werden können. Zur Entfernung von Stickoxiden aus dem Abgas von Magermotoren können sogenannte Stickoxid-Speicherkatalysatoren eingesetzt.

Ein Stickoxid-Speicherkatalysator oxidiert während einer Speicherphase das im mageren Abgas enthaltene Stickstoffmonoxid zu Stickstoffdioxid und speichert es anschließend in Form von Nitraten. Die Arbeitsweise von Stickoxid-Speicherkatalysatoren wird ausführlich in der SAE-Schrift SAE 950809 beschrieben. Zur Oxidation von Stickstoffmonoxid enthält ein Speicherkatalysator als katalytisch aktive Komponenten gewöhnlich Platin und gegebenenfalls Palladium. Zur Speicherung der Stickoxide als Nitrate dienen basische Oxide, Karbonate oder Hydroxide von Alkalimetallen, Erdalkalimetallen und Seltenerdmetallen; bevorzugt werden basische Verbindungen des Bariums und Strontiums eingesetzt.

Nach Erschöpfung seiner Speicherkapazität muß ein Speicherkatalysator während einer Regenerationsphase regeneriert werden. Hierzu wird das Abgas kurzzeitig angefettet zum Beispiel durch Betreiben des Motors mit einem fetten Luft/Kraftstoff-Gemisch. Im fetten Abgas werden die Stickoxide wieder desorbiert und an den katalytisch aktiven Komponenten mit Hilfe der fetten Abgasbestandteile zu Stickstoff reduziert. Zu diesem Zweck enthält der Speicherkatalysator gewöhnlich Rhodium zusätzlich zum Platin.

Speicherphase und Regenerationsphase wechseln sich regelmäßig ab. Der Wechsel von Speicherphase und Regenerationsphase wird als Fett/Mager-Wechselbetrieb bezeichnet. Die Speicherphase dauert gewöhnlich zwischen 60 und 200 Sekunden, während die Dauer der Regenerationsphase nur zwischen 1 und 10 % der Speicherphase beträgt und somit nur wenige Sekunden umfaßt.

Stickoxid-Speicherkatalysatoren werden in ihrer Funktion beeinträchtigt durch im Kraftstoff und Motoröl enthaltene Schwefelverbindungen, die bei der Verbrennung im wesentlichen als Schwefeldioxid ins Abgas gelangen und von den Stickoxid-Speicherkatalysatoren in Form von sehr stabilen Sulfaten gebunden werden. Das geht zu Lasten der Stickoxid-Speicherkapazität. Bei hohen Schwefelgehalten im Kraftstoff (> 10 ppm) müssen Stickoxid-Speicherkatalysatoren deshalb häufig entschwefelt werden. Hierzu muß das Abgas auf Entschwefelungsbedingungen gebracht werden, das heißt es muß angefettet und seine Temperatur angehoben werden. Die Luftzahl Lambda λ des Abgases sollte auf einen Wert unter 0,98, bevorzugt auf unter 0,95 abgesenkt und die Abgastemperatur auf einen Wert zwischen 600 bis 750 °C gebracht werden. Unter diesen Bedingungen werden die gebildeten Sulfate zersetzt und als Schwefelwasserstoff oder bevorzugt als Schwefeldioxid emittiert.

Bei Belastung eines Stickoxid-Speicherkatalysators mit einem schwefelhaltigen Abgas muß der Speicherkatalysator also neben der regelmäßigen Regeneration zur Entfernung der gespeicherten Stickoxide auch von Zeit zu Zeit entschwefelt werden, um eine kontinuierliche Verschlechterung der Stickoxid-Speicherkapazität durch gebildete Sulfate rückgängig zu machen. Das Intervall zwischen zwei Entschwefelungen hängt vom Schwefelgehalt des Kraftstoffs ab, beträgt jedoch auch bei hohen Schwefelgehalten in der Regel noch mehrere Betriebsstunden des Motors und ist damit wesentlich größer als das Intervall zwischen zwei Regenerationen zur Entfernung der gespeicherten Stickoxide. Für die Entschwefelung werden gewöhnlich 2 bis 10 Minuten benötigt. Sie dauert somit ebenfalls länger als die Stickoxid-Regeneration des Speicherkatalysators.

Die häufige Entschwefelung geht zu Lasten des Kraftstoffverbrauchs und führt wegen der notwendigen hohen Abgastemperaturen zu einer schnellen Alterung der Katalysatoren. Deshalb werden Kraftfahrzeuge mit mager betriebenen Ottomotoren bislang nur auf dem europäischen Markt verkauft, da hier Kraftstoffe mit einem Schwefelgehalt von weniger als 10 ppm angeboten werden. In den USA ist die Abgasgesetzgebung zwar besonders streng, der Schwefelgehalt im Kraftstoff für Ottomotoren liegt jedoch hier zur Zeit noch bei bis zu 30 ppm. In anderen Regionen liegt der Schwefelgehalt im Kraftstoff noch deutlich höher.

Die Entwicklung von Kraftfahrzeugen mit mager betriebenen Ottomotoren für Märkte mit hohem Schwefelgehalt im Kraftstoff muß also berücksichtigen, daß in diesem Fall die Stickoxid-Speicherkatalysatoren häufig entschwefelt werden müssen. Zu den schon erwähnten Nachteilen der häufigen Entschwefelung, nämlich dem erhöhten Kraftstoffverbrauch und der hohen Temperaturbelastung der Katalysatoren, tritt als weiterer Nachteil eine hohe Emission von Kohlenwasserstoffen und Stickoxiden während der Entschwefelung, denn das fette Abgas während der Entschwefelung enthält hohe Konzentrationen an unverbrannten Kohlenwasserstoffen, Kohlenmonoxid und Stickoxiden sowie an den Katalysatoren aus den Stickoxiden gebildeten Ammoniak aber kaum Sauerstoff, um diese Abgaskomponenten an den Katalysatoren umzusetzen. Sie werden daher als Schadstoffe ungereinigt an die Umgebung abgegeben.

Die amerikanische Abgasgesetzgebung schreibt allerdings vor, daß die ohnehin schon sehr niedrigen Grenzwerte für Kohlenwasserstoffe, Kohlenmonoxid und Stickoxide auch unter Berücksichtigung der Entschwefelung der Stickoxid-Speicherkatalysatoren eingehalten werden müssen. Die Emissionen während der Entschwefelung von Stickoxid-Speicherkatalysatoren werden zu diesem Zweck umgelegt auf den gesamten für die Emissionsmessungen vorgesehenen Fahrzyklus. Es hat sich gezeigt, daß schon die Emissionen während einer einzigen Entschwefelung von Stickoxid-Speicherkatalysatoren über den vorgeschriebenen Grenzwerten für sogenannte SULEV-Fahrzeuge (SULEV = Super Ultra Low Emission Vehicle) liegen können.

Aufgabe der vorliegenden Erfindung ist es, ein Verfahren zur Entschwefelung von Stickoxid-Speicherkatalysatoren anzugeben, welches die erhöhte Schadstoffemission während der Entschwefelung weitgehend unterdrückt und somit die Einhaltung der Grenzwerte für mager betriebene Verbrennungsmotoren auch bei schwefelhaltigen Kraftstoffen möglich macht.

Diese Aufgabe wird durch das durch Anspruch 1 beschriebene Verfahren gelöst. Das Verfahren setzt einen Magermotor mit mehreren Zylindern voraus, die in eine erste und eine zweite Gruppe aufgeteilt werden. Die Abgase der beiden Zylindergruppen werden in jeweils zugeordnete Abgasleitungen abgegeben. Beide Abgasleitungen enthalten jeweils mindestens einen Stickoxid-Speicherkatalysator zur Entfernung der Stickoxide im Abgas. Beide Abgasleitungen münden stromabwärts der Speicherkatalysatoren an einer Einmündung in eine gemeinsame Abgasleitung. Die gemeinsame Abgasleitung enthält zur weiteren Nachbehandlung des Abgases einen Katalysator, der unter stöchiometrischen Bedingungen eine Dreiweg-Funktion aufweist, wodurch er gleichzeitig Kohlenwasserstoffe, Ammoniak, Stickoxide und Kohlenmonoxid aus dem stöchiometrischen Abgas entfernen kann. Dieser Katalysator wird im folgenden kurz als Dreiweg-Katalysator bezeichnet.

Der Magermotor kann als Reihenmotor ausgeführt sein, bei dem alle Zylinder in einer einzigen Zylinderbank hintereinander angeordnet sind. Alternativ kann jede Gruppe der Zylinder in einer separaten Zylinderbank zusammengefaßt sein.

Erfindungsgemäß werden die Stickoxid-Speicherkatalysatoren in den beiden Abgasleitungen zeitlich gegeneinander versetzt entschwefelt. Die hierfür notwendigen Entschwefelungsbedingungen können durch motorische Maßnahmen oder durch externe Maßnahmen eingestellt werden. Zu den motorischen Maßnahmen gehören das Betreiben der jeweils zugeordneten Gruppe von Zylindern mit einem fetten Luft/Kraftstoff-Gemisch, die Nacheinspritzung von Kraftstoff, eine späte Verbrennungslage oder eine mehrstufigen Verbrennung. Diese Maßnahmen könne auch miteinander kombiniert werden. Zur externen Einstellung der Entschwefelungsbedingungen kann das Abgas durch Eindüsen von Kraftstoff in die jeweilige Abgasleitung vor dem Stickoxid-Speicherkatalysator angefettet und seine Temperatur zum Beispiel durch externe Beheizung auf Entschwefelungstemperatur angehoben werden. Die externe Beheizung kann auch durch vor den Stickoxid-Speicherkatalysatoren angeordneten Oxidationskatalysatoren und Verbrennung des eingedüsten Kraftstoffs auf diesen Katalysatoren vorgenommen werden.

Während der Entschwefelung des einen Stickoxid-Speicherkatalysators wird der andere Stickoxid-Speicherkatalysator unter mageren Abgasbedingungen des Magermotors betrieben. Die Luftzahlen der Abgase in beiden Abgasleitungen werden so aufeinander abgestimmt, daß das Abgas in der gemeinsamen Abgasleitung während der gesamten Entschwefelungsdauer im Idealfall eine Luftzahl Lambda von 1 aufweist, das heißt stöchiometrisch zusammengesetzt ist. Im realen Fall wird die Luftzahl in der gemeinsamen Abgasleitung wegen der dynamischen Betriebsbedingungen der Motoren zeitlich variabel mehr oder weniger stark nach unten oder oben vom Idealwert abweichen.

Der andere Stickoxid-Speicherkatalysator wird zeitlich versetzt gegen den ersten Stickoxid-Speicherkatalysator in entsprechender Weise entschwefelt. Zwischen zwei Entschwefelungen werden beide Stickoxid-Speicherkatalysatoren im bekannten Wechselbetrieb zwischen Speicherphase und Regenerationsphase betrieben.

Für die Entschwefelung des einen Stickoxid-Speicherkatalysators wird das Abgas auf eine Luftzahl Lambda < 1 angefettet, bevorzugt auf < 0,98 und besonders auf < 0,95. Zur gleichen Zeit wird der zweite Speicherkatalysator bei einer Luftzahl des Abgases Lambda > 1, bevorzugt > 1,1 betrieben. Nach der Zusammenführung der beiden Abgasströme weist das gemeinsame Abgas eine Luftzahl von etwa Lambda = 1 auf. Unter diesen Bedingungen können durch den Dreiweg-Katalysator in der gemeinsamen Abgasleitung die Schadstoffkomponenten aus dem fetten Abgas der einen Abgasleitung mit den Schadstoffkomponenten aus dem mageren Abgas der anderen Abgasleitung nahezu vollständig beseitigt werden.

Ein weiterer Vorteil der Erfindung ist, daß die Entschwefelung unter konstant fetten Abgasbedingungen durchgeführt werden kann. Der dabei gebildete Schwefelwasserstoff wird nämlich am Dreiweg-Katalysator in der gemeinsamen Abgasleitung zu Schwefeldioxid umgesetzt. Dagegen wird bei den aus dem Stand der Technik bekannten Entschwefelungsverfahren das Abgas gewöhnlich im schnellen Wechsel zwischen mager und fett hin- und hergeschaltet, um die Bildung von Schwefelwasserstoff zu unterdrücken. Dieser Wechselbetrieb benötigt allerdings höhere Abgastemperaturen für die Entschwefelung und führt zu höherem Kraftstoffverbrauch und längeren Entschwefelungszeiten im Vergleich zu dem hier beschriebenen Verfahren.

Während der Entschwefelung des einen Speicherkatalysators kann der zweite Speicherkatalysator mit konstant magerem Abgas betrieben werden. Die regelmäßige Stickoxid-Regeneration des zweiten Speicherkatalysators während der Entschwefelung des ersten Speicherkatalysators ist nicht notwendig. Zwar ist die Speicherkapazität des zweiten Speicherkatalysators für Stickoxide schon etwa 1 bis 2 Minuten nach Beginn der Entschwefelung des ersten Speicherkatalysators erschöpft, die deshalb durch den Stickoxid-Speicherkatalysator durchbrechenden Stickoxide werden jedoch vollständig vom nachgeschalteten Dreiweg-Katalysator umgesetzt.

Der Katalysator in der gemeinsamen Abgasleitung muß unter stöchiometrischen Abgasbedingungen die Funktion eines Dreiweg-Katalysators ausüben können. Zu diesem Zweck enthält er wenigsten ein Edelmetall aus der Gruppe Platin, Palladium und Rhodium. Bevorzugt enthält der Katalysator Palladium und/oder Rhodium. Ferner kann der Katalysator sogenannte Sauerstoff-Speichermaterialien enthalten, besonders Ceroxid oder ein Ceroxid enthaltendes Mischoxid. Bevorzugt wird ein speziell als Dreiweg-Katalysator ausgebildeter Katalysator eingesetzt. Alternativ kann jedoch anstelle eines Dreiweg-Katalysators ein Stickoxid-Speicherkatalysator in der gemeinsamen Abgasleitung verwendet werden. Dieser erfüllt die gleiche Aufgabe wie ein Dreiweg-Katalysator, wenn das Abgas stöchiometrisch zusammengesetzt ist, das heißt eine Luftzahl von Lambda = 1 besitzt. Im normalen Betrieb der Abgasreinigungsanlage kann der Speicherkatalysator zusätzlich zum Umsatz von Stickoxiden beitragen, indem er diese während der Magerphase einspeichert und durch kurze Fettpulse zu Stickstoff umsetzt.

Die Vorgabe der Luftzahl Lambda = 1 für das Abgas in der gemeinsamen Abgasleitung während der Entschwefelung ist natürlich nur im Rahmen der hierfür üblichen Toleranzen von ± 0,04, bevorzugt ± 0,02 zu verstehen. In bestimmten Fällen kann es sogar vorteilhaft sein, die Luftzahl in der gemeinsamen Abgasleitung im Rahmen des angegebenen Toleranzintervalls leicht fett oder leicht mager einzustellen. Ein leicht mageres Abgas in der gemeinsamen Abgasleitung kann dann vorteilhaft sein, wenn der bei der Entschwefelung gebildete Schwefelwasserstoff am Dreiweg-Katalysator zu Schwefeldioxid oxidiert werden soll. Wird anstelle eines echten Dreiweg-Katalysators ein Stickoxid-Speicherkatalysator verwendet, so kann durch ein leicht fettes Abgas verhindert werden, daß das beim Entschwefeln gebildete Schwefeldioxid oder Schwefelwasserstoff vom Stickoxid-Speicherkatalysator in der gemeinsamen Abgasleitung unter Bildung von Sulfaten absorbiert wird.

Zur genauen Regelung der geforderten Abgaszusammensetzung in der gemeinsamen Abgasleitung ist es sinnvoll, eine Sauerstoffsonde vor und/oder hinter dem Dreiweg-Katalysator anzuordnen. Diese Sonde gibt ihr Lambda-Signal an eine Motorsteuerung weiter. Werden die Entschwefelungsbedingungen durch motorische Maßnahmen eingestellt, so wird die Verbrennung in den beiden Zylindergruppen so geführt, daß in der gemeinsamen Abgasleitung ein möglichst stöchiometrisches Abgasgemisch vorliegt. Geeignete Sauerstoffsonden sind lineare Lambdasonden oder sogenannte Sprungsonden. Auch Stickoxid-Sonden können zur Messung des Sauerstoffgehaltes eingesetzt werden.

Wenn motorische Maßnahmen zur Einstellung der Entschwefelungsbedingungen nicht gewünscht oder nicht möglich sind, wie es zum Beispiel bei Dieselmotoren der Fall sein kann, so können fette beziehungsweise magere Abgasgemische in den jeweiligen Abgasleitungen während der Entschwefelung auch durch direktes Eindüsen von Kraftstoff in die jeweiligen Abgasleitungen eingestellt werden.

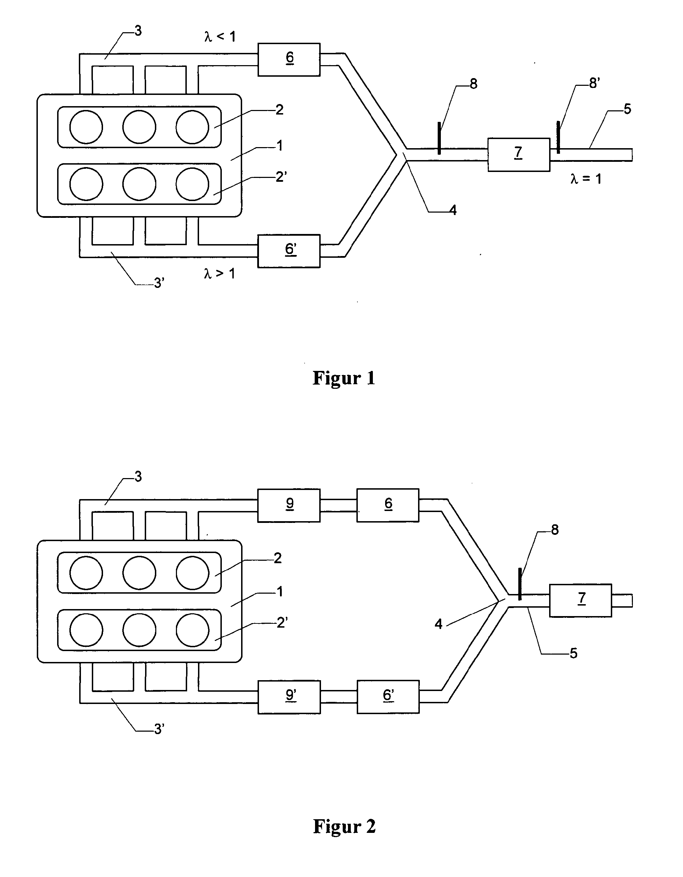

Die Erfindung wird im folgenden an Hand der Figuren 1 und 2 näher erläutert. Es zeigen:
- **Figur 1:**: Abgasreinigungsanlage zur Durchführung des Verfahrens zur Entschwefelung mit verminderter Emission von Schadstoffen
- **Figur 2:**: Eine weitere Ausführungsform der Abgasreinigungsanlage zur Durchführung des Verfahrens zur Entschwefelung mit verminderter Emission von Schadstoffen

Figur 1 zeigt eine Abgasreinigungsanlage zur Durchführung des Entschwefelungsverfahrens mit vermindertem Schadstoffausstoß. Bezugsziffer (1) bezeichnet einen Magermotor mit zwei Zylinderbänken (2) und (2'). Die Abgase dieser Zylinderbänke werden in die beiden Abgasleitungen (3) und (3') abgegeben. An der Einmündung (4) sind die beiden Abgasleitung (3) und (3') zu einer gemeinsamen Abgasleitung (5) vereinigt. Zur Speicherung und Umsetzung der vom Magermotor (1) emittierten Stickoxide sind in den Abgasleitungen (3) und (3') die Stickoxid-Speicherkatalysatoren (6) und (6') angeordnet. In der gemeinsamen Abgasleitung befindet sich der Dreiweg-Katalysator oder Stickoxid-Speicherkatalysator (7). Die Bezugsziffern (8) und (8') bezeichnen die möglichen Positionen einer Sauerstoffsonde (Lambda-Sonde).

Zur Entschwefelung des Stickoxid-Speicherkatalysators (6) werden die Zylinder der Zylinderbank (2) von einer nicht gezeigten Motorsteuerung mit fettem Luft/Kraftstoff Gemisch betrieben. Dies führt zu einem Abgas mit einer Luftzahl kleiner als 1, dessen Temperatur zum Beispiel durch Nacheinspritzung auf die notwendige Entschwefelungstemperatur von etwa 700 °C angehoben wird. Während der gesamten Entschwefelungsdauer von etwa 2 bis 10 Minuten werden die Zylinder der zweiten Zylinderbank (2') mit einem mageren Luft/Kraftstoffgemisch betrieben. Das entsprechend magere Abgas mit Lambda größer 1 weist eine für den Stickoxid-Speicherkatalysator optimale Temperatur von 300 bis 400 °C auf. An der Einmündung der beiden Abgasleitungen werden die beiden Abgasströme gemischt und führen zu einem gemeinsamen Abgas mit einer Temperatur, die zwischen der Entschwefelungstemperatur und der normalen Abgastemperatur liegt. Der Sauerstoffgehalt des kombinierten Abgases wird mit den Sauerstoffsonden (8) und/oder (8') gemessen und mit Hilfe der Motorsteuerung auf einen Wert der Luftzahl möglichst nahe bei 1 eingeregelt.

Figur 2 zeigt eine Variante der Abgasreinigungsanlage zur Durchführung des Verfahrens. Vor den Stickoxid-Speicherkatalysatoren (6) und (6') ist jeweils ein weiterer Katalysator (9) und (9') in die Abgasleitungen eingefügt. Hierbei kann es sich um einen weiteren Stickoxid-Speicherkatalysator, einen Dreiweg-Katalysator oder einen Oxidationskatalysator handeln. Mit allen drei Katalysatortypen kann die Schadstoffemission der Abgasreinigungsanlage weiter vermindert werden. Im Falle von Dieselmotoren kann es vorteilhaft sein, zwischen den Katalysatoren (9) und (6) sowie zwischen (9') und (6') oder jeweils hinter den Katalysatoren (6) und (6') ein Dieselpartikelfilter anzuordnen, mit oder ohne einer katalytischen Beschichtung.

## Patentansprüche

1. Verfahren zum Entschwefeln von Stickoxid-Speicherkatalysatoren in der Abgasanlage eines Magermotors (1) mit mehreren Zylindern,
**dadurch gekennzeichnet,**
**daß** die Zylinder des Magermotors in eine erste Gruppe (2) und eine zweite Gruppe von Zylindern (2') aufgeteilt sind, die ihre Abgase in jeweils zugeordnete erste (3) und zweite Abgasleitungen (3') abgeben und wobei in jeder Abgasleitung mindestens ein Stickoxid-Speicherkatalysator (6) und (6') angeordnet ist und beide Abgasleitungen stromabwärts der Speicherkatalysatoren an einer Einmündung (4) zu einer gemeinsamen Abgasleitung (5) vereinigt sind, die einen Katalysator (7) enthält, der unter stöchiometrischen Bedingungen eine Dreiweg-Funktion besitzt, wobei der erste Stickoxid-Speicherkatalysator (6) entschwefelt wird durch Anfetten des Abgases in der ersten Abgasleitung (3) und Anheben seiner Temperatur auf Entschwefelungstemperatur, während das Abgas in der zweiten Abgasleitung (3') konstant mager gehalten wird, wobei die Abgase in beiden Abgasleitungen so aufeinander abgestimmt sind, daß das Abgas in der gemeinsamen Abgasleitung (5) während der gesamten Entschwefelungsdauer eine Luftzahl von etwa Lambda = 1 aufweist und der zweite Stickoxid-Speicherkatalysator (6') zeitlich versetzt gegen den ersten Stickoxid-Speicherkatalysator (6) in entsprechender Weise entschwefelt wird.

2. Verfahren nach Anspruch 1,
**dadurch gekennzeichnet,**
**daß** das Abgas zur Entschwefelung der Speicherkatalysatoren durch motorische Maßnahmen angefettet und seine Temperatur auf Entschwefelungstemperatur gebracht wird.

3. Verfahren nach Anspruch 2,
**dadurch gekennzeichnet,**
**daß** die motorischen Maßnahmen ausgewählt sind aus dem Betreiben der jeweils zugeordneten Gruppe von Zylindern mit einem fetten Luft/Kraftstoff-Gemisch, der Nacheinspritzung von Kraftstoff, einer späten Verbrennungslage, einer mehrstufigen Verbrennung oder einer Kombination dieser Maßnahmen.

4. Verfahren nach Anspruch 1,
**dadurch gekennzeichnet,**
**daß** das Abgas zur Entschwefelung der Speicherkatalysatoren durch Eindüsen von Kraftstoff in die jeweilige Abgasleitung vor dem Stickoxid-Speicherkatalysator angefettet und seine Temperatur durch externe Beheizung auf Entschwefelungstemperatur angehoben wird.

5. Verfahren nach Anspruch 1,
**dadurch gekennzeichnet,**
**daß** vor und/oder nach dem Katalysator mit Dreiweg-Funktion eine Sauerstoffsonde angeordnet ist zur Regelung der Luftzahl in der gemeinsamen Abgasleitung.
